# EUROPEAN PATENT APPLICATION

(11) **EP 2 508 336 A1**
(43) Date of publication of application: **10.10.2012**
(21) Application number: 11168999.8
(22) Date of filing: 07.06.2011
(51) Int. Cl.: B32B 5/18, B32B 27/08, B32B 27/32, B32B 27/36, E04C 2/296

(54) **Fire-proof plate**

(30) Priority: 04.04.2011 EP 11382095
(71) Applicant: Industrial Neo Tex SA, 28660 Boadilla del Monte, Madrid (ES)
(72) Inventor: Freire de la Cruz, Jose Antonio, E- 28660 Boadilla del Monte - Madrid (ES); Hernanz Arbeloa, Angel María, E-28660 Boadilla del Monte-Madrid (ES)
(74) Representative: ABG Patentes, S.L.

(57) **Abstract**

The present invention relates to a very lightweight plate which is capable of overcoming flammability, smoke toxicity and heat release tests required by reference aeronautical authorities: EASA (European Aviation Safety Agency) and the FAA (Federal Aviation Administration). The invention combines two layers, a first layer of a first thermoplastic, preferably polycarbonate attached to a second layer formed by a second foamed thermoplastic, preferably an expanded polypropylene.

## Description

### Object of the Invention

The present invention relates to a very lightweight plate which is capable of overcoming flammability, smoke toxicity and heat release tests required by reference aeronautical authorities: EASA (European Aviation Safety Agency) and the FAA (Federal Aviation Administration).

### Background of the invention

The aeronautical field combines technical limitations and requirements which strongly restrict the range of materials to be used in the components which are employed in the construction of an aircraft or in devices housed therein.

Requirements, such as for example, high resistance, high impact absorption capacity, low toxicity, reduced heat release or low flammability are some of the properties which are identifiable with materials having a high specific weight such as metals (for example aluminium alloys). The use of materials having a high specific weight reduces the aircraft load capacity and therefore it is one of the most relevant variables when selecting them for the manufacture of components for parts and devices for aeronautical use.

There are light, impact-resistant and good thermal insulating materials. One of the most interesting materials is foamed thermoplastics; and among them, expanded polypropylene, which will be identified hereinafter as EPP, especially when they have densities between 20g/l and 80g/l. However, in view of the requirements for little heat release in flammability tests and in the emission of gases such as CO, the use of materials with lower heat and emission values is desirable.

The values obtained in the flammability tests of a polycarbonate for normal use are shown in the following table (the standards regulating the test used are indicated):

| Polycarbonate | | |
|---|---|---|
| Flammability *FAR*/*JAR*/*CS-25 25.853 (a) App . F(1) (ii)* | After the flame (sec) | NA (Not Available) |
| | Burn length (in) | NA |
| | Drip Exting time | NA |
| Heat release test *FAR*/*JAR*/*CS 25.853 (d) App. Pt IV (g)* | 2 min. Total released (kW min/m²) | 30.3 |
| | Peak value (Kw/m²) | 40 |
| Smoke emission *FAR*/*JAR*/*CS 25.853 (d) App.F.Pt V(b)* | Maximum in 4 min. (flaming) | 19.5 |
| Smoke emission *AIRBUS ABD0031 BOEING D6-51377* | Maximum in 4 min. (flaming) | 19.5 |
| Toxic gas emission *(ppm)* *AIRBUS ABD0031 BOEING D6-51377* | CO (flaming) | 50 |
| | HCN (flaming) | <2 |
| | HF (flaming) | <2 |
| | HCL (flaming) | <2 |
| | SO₂ (flaming) | <20 |
| | NOₓ (flaming) | 0 |

Relating solely to the lightness, foamed thermoplastics materials such as expanded polypropylene, commonly known as EPP, are very lightweight materials which are further capable of absorbing large amounts of energy against impacts.

The greatest drawback of materials of this type is their behavior in the case of fire. In this case, the tests produce results for variables such as the heat release and smoke emission making the use thereof in the aeronautical field nonviable. The same occurs for CO emission, where in this case values of 110 ppm are reached.

Fire resistance and inflammability experiments performed on EPP are shown in the table below:

| Expanded polypropylene | | |
|---|---|---|
| Inflammability *FAR*/*JAR*/*CS-25 25.853 (a) App . F(1) (ii)* | After the flame (sec) | 0 |
| | Burn length (in) | 5.15 |
| | Drip Exting time | 0 |
| Heat release test *FAR*/*JAR*/*CS 25.853 (d) App. Pt IV (g)* | 2 min. Total released (kW min/m²) | 315.4 |
| | Peak value (Kw/m²) | 258.05 |
| Smoke emission *FAR*/*JAR*/*CS 25.853 (d) App.F.Pt V(b)* | Maximum in 4 min. (flaming) | 181 |
| Smoke emission *AIRBUS ABD0031 BOEING D6-51377* | Maximum in 4 min. (flaming) | 181 |
| Toxic gas emission *(ppm)* *AIRBUS ABDO031 BOEING D6-51377* | CO (flaming) | 110 |
| | HCN (flaming) | <2 |
| | HF (flaming) | <2 |
| | HCL (flaming) | <2 |
| | SO₂ (flaming) | <20 |
| | NOₓ (flaming) | 4 |

The disproportionate values in heat release (315.4 kWmin/m²), peak value (258.05 kWmin/m²), smoke emission (181 ppm), and CO emission (110 ppm) are checked, some of them are high enough such that they do not allow the use of this material in aeronautical components.

One of the products in which the use of materials with sufficient mechanical strength and impact resistance but which at the same time overcomes the heat release, smoke emission and gas emission tests is the manufacturing of trolleys for use in the aircraft, for example, for distributing drinks and food among passengers.

During the design process, if a person skilled in the art who was considering the polycarbonate used in the fire proof tests shown in the table above as the candidate material due to the lower values obtained in the flammability tests needed to improve its mechanical properties, he would select the thickest, always ensuring that the use thereof does not exceed the heat and gas emission amounts which prevent overcoming the applicable limitations due to fire tests. Otherwise, in the case of non-compliance with these requirements the person skilled in the art would continue using materials such as aluminium as he has been doing up until now.

The present invention proposes a combination of materials which solves the problems raised above and which materials, when independently considered, offer worse results in flammability tests.

### Description of the Invention

The present invention is a plate comprising a first layer of a first thermoplastic attached to a second layer formed by a second foamed thermoplastic. This plate formed with this combination of materials the properties of which are known and do not independently overcome the flammability tests, surprisingly allow solving the above problems showing a synergistic effect, whereby the values obtained in flammability tests are even lower than those offered by the material with a better performance against inflammability.

These tests have been performed with different attachment means, even by mechanical means such as riveting, to show that the synergistic effect is not due to the use of an adhesive as an additional chemical component which somehow acts synergistically.

In these flammability tests the materials form a plate with at least two layers, a layer of the first thermoplastic and a second layer with the foamed thermoplastic material. The flame acts on one of the two sides during the time stipulated by the standard. During that time the thermal energy released as well as the gases and smoke are controlled.

This arrangement does not depend on the fact that the plate gives rise to an enclosed area in which the fuel is burnt and gives rise to the fuel being used-up. Thus, if the new material formed by the combination according to the invention is used in a closed object such as a trolley, the results against the action of the fire will be even better.

All of those plates resulting from the different combinations established by dependent claims 2 to 6 which are incorporated by reference in this description are also object of this invention. It is understood that the plate is a structural element, as it is understood in the field of structural engineering, being able to adopt configurations in which its main surface does not have to be flat but rather it can present a curvature in any of the main directions.

A trolley according to claims 7 and 8 is also considered incorporated by reference to this description.

### Description of the Drawings

The foregoing and other advantages and features of the invention will be better understood from the following detailed description of a preferred embodiment in reference to the attached drawings which must be interpreted in an illustrative and non-limiting manner.
Figure 1 shows the basic structure of a plate according to an embodiment of the invention.
Figure 2 shows an embodiment of a plate manufactured according to another schematic embodiment.
Figure 3a, 3b, 3c shows an embodiment of a trolley constructed by means of plates like those tested in the previous embodiments.

### Detailed Description of the Invention

The present invention comprises the combination of two layers, a first layer of a thermoplastic and a second layer of a foamed thermoplastic. In a first embodiment a layer of polycarbonate (1) 1.5 mm thick and a thicker second layer of expanded polypropylene (2) 17 mm thick have been used.

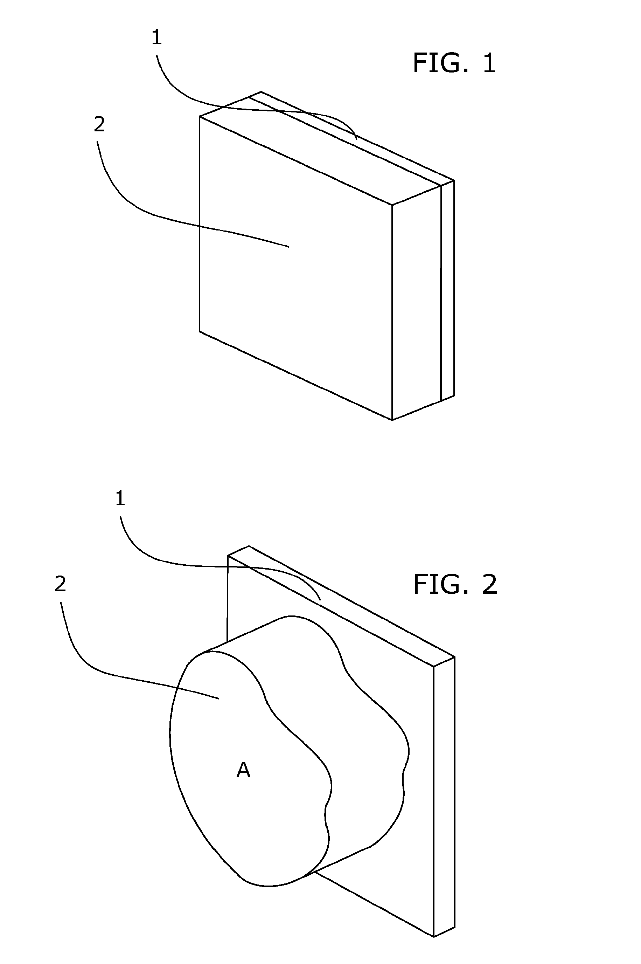

This plate, depicted in Figure 1, forms the main structure of the plate where both materials have been attached with a water-based adhesive, although any adhesive in which the solvent does not destroy the structure of any the layers to be attached could be used.

Inflammability tests have been performed with the plate of the first embodiment and they have been compared with the values obtained independently, which are shown in the preceding tables:

| Combination of PC and EPP | | |
|---|---|---|
| Inflammability *FAR*/*JAR*/*CS-25 25.853 (a) App. F(1) (ii)* | After the flame (sec) | 0 |
| | Burn length (in) | 2.8 |
| | Drip Exting time | 0 |
| Heat release test *FAR*/*JAR*/*CS 25.853 (d) App. Pt IV (g)* | 2 min. Total released (kW min/m²) | 13.55 |
| | Peak value (Kw/m²) | 35,85 |
| Smoke emission *FAR*/*JAR*/*CS 25.853 (d) App.F.Pt V(b)* | Maximum in 4 min. (flaming) | 36 |
| Smoke emission *AIRBUS ABD0031 BOEING D6-51377* | Maximum in 4 min. (flaming) | 36 |
| Toxic gas emission *(ppm) AIRBUS ABD0031 BOEING D6-51377* | CO (flaming) | 20 |
| | HCN (flaming) | <2 |
| | HF (flaming) | <2 |
| | HCL (flaming) | 3 |
| | SO₂ (flaming) | <20 |
| | NOₓ (flaming) | <2 |

In view of these results, it surprisingly shows how the burn length is much shorter than that of expanded polypropylene, it is being reduced from 5.15 to 2.8.

Yet more surprising are the two additional results: heat release and CO emission.

In the case of heat release, the presence of expanded polypropylene (2) causes an amount of heat of 315.4 kW min/m² and 30.3 kW min/m² for polycarbonate (1). It was expected that by attaching both the materials to one another they would provide a very large amount of heat close to the sum of both. However, the values measured are lower, even less than the value measured for polycarbonate (1), resulting in a value of 13.55 kW min/m².

Another surprising value is that of the toxic gas emission, particularly CO emission. Although in the case of expanded polypropylene (2) the measured value is 110 and that of polycarbonate (1) is 55, the value measured in the combination used in this embodiment is 20, a value even less than the minimum value established by the polycarbonate (1).

Any of these values justifies an unexpected technical effect by knowing the individual values of the components which give rise to the plate. These two values are not the only improved values. Another very relevant variable is the generation of smoke. In this case, the embodiment gives 36 ppm as a result in the test which, although a little above the polycarbonate value of 19.5, considerably improves the expanded polypropylene value which goes up to 181.

The only value that worsens slightly is the HCl formation value, however the value of 3 allows passing the tests required by the standard.

Figure 2 shows a second embodiment in which one of the layers, in this case, the layer of polycarbonate (1), is extended with greater length. In this case, the area (A) with the combination of materials is where the beneficial effects of the combination is obtained and it will also be where improved results will be obtained in the inflammability tests. The extension of one of the layers allows, for example, closing parts where the plate must be attached with other plates or resistant elements, without this extension implying that the invention is not being carried out.

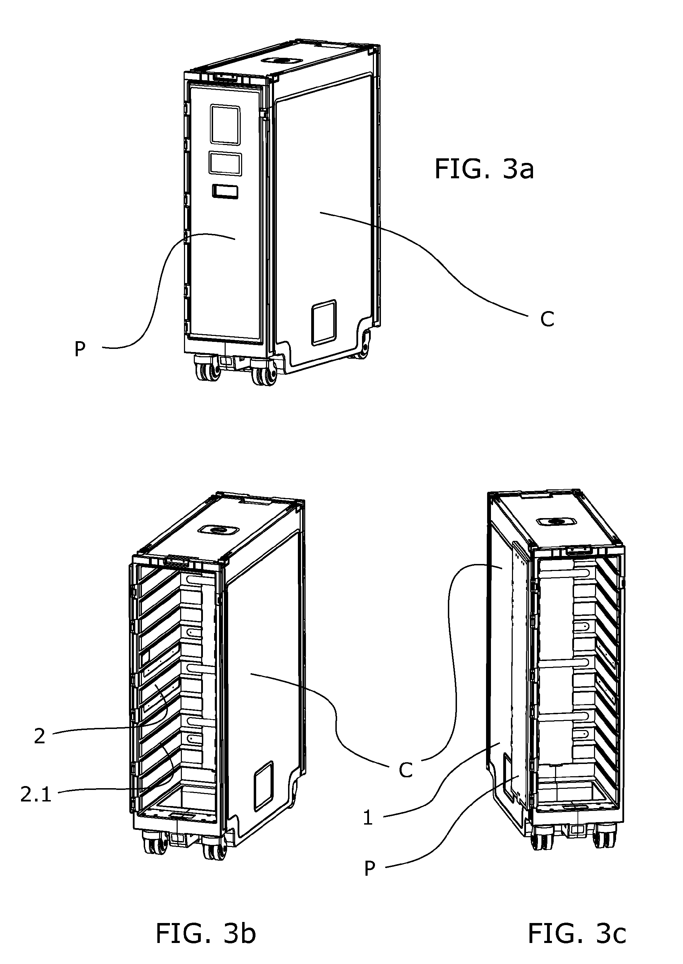

As a practical embodiment, Figures 3a, 3b and 3c show different views of a trolley for use in aircrafts. This trolley has been made with walls giving rise to the main body (B) in which the outer part is formed by a layer of polycarbonate (1) and the inside by expanded polypropylene (2). This inner layer allows using different thickness to give rise to grooves (2.1) for housing food or drink trays. Even with the changes of thickness due to the presence of these grooves (2.1), the combination of two layers, one of a first thermoplastic (1) and a second foamed thermoplastic (2), allows obtaining the synergistic effect which causes a reduced release of heat, smoke and toxic gases. Each particular design must be adjusted by means of experiments to comply with a determined standard.

Likewise, in this embodiment it is possible to make use of a plate such as that described by combining a plate of polycarbonate (1) and expanded polypropylene (2) for manufacturing the doors (D).

The embodiment of a practical case like the one proposed allows establishing a closed cavity protecting the more vulnerable material, expanded polypropylene. Other products susceptible to being manufactured with the combination claimed are seats, parts of them, panels cushions and others.

The advantages offered by these products are:
- Increased safety relating to flammability for aircrafts.
- Significant aircraft weight reduction.
- Better travel comfort.
- Fewer damages due to the impact of equipment against the aircraft panels.
- Savings in aircraft construction.
- Fuel savings.
- Better soundproofing and thermal insulation of aircrafts.
- Recyclable material.

## Claims

1. A plate comprising a first layer of a first thermoplastic attached to a second layer formed by a second foamed thermoplastic.

2. The plate according to claim 1, **characterized in that** the first thermoplastic is one of the following: polyethylene terephthalate or ethylene polyterephthalate (PET), polyetherimides (PEI), polysulphonate (PSU); polyphenylsulphone (PPSU or PPSF) and preferably, polycarbonate (PC).

3. The plate according to claim 2, **characterized in that** the first thermoplastic is polycarbonate with a density between 1200 Kg/m³ to 1500 Kg/m³.

4. The plate according to claims 1 or 2, **characterized in that** the second foamed thermoplastic is expanded polypropylene (EPP).

5. The plate according to claim 4, **characterized in that** the density of the expanded polypropylene (EPP) is in the range of 10g/l to 300g/l.

6. The plate according to any of the preceding claims, **characterized in that** the layer of polycarbonate (PC) and the expanded polypropylene (EPP) plate are attached by means of an adhesive forming a single body.

7. A trolley for use in aircrafts formed by a body which comprises at least one plate according to any of claims 1 to 6.

8. The trolley according to the preceding claim, **characterized in that** the doors also comprise a plate according to any of claims 1 to 6.
